# EUROPÄISCHE PATENTANMELDUNG

(11) **EP 3 104 025 A1**
(43) Veröffentlichungstag der Anmeldung: **14.12.2016**
(21) Anmeldenummer: 15171632.1
(22) Anmeldetag: 11.06.2015
(51) Int. Cl.: F16B 13/06

(54) **SPREIZDÜBEL MIT DOPPELBESCHICHTUNG**

(71) Anmelder: HILTI Aktiengesellschaft, 9494 Schaan (LI)
(72) Erfinder: Gstach, Peter, 9494 Schaan (LI); Beckert, Michael, 9444 Diepoldsau (CH); Winkler, Bernhard, 6800 Feldkirch (AT); Scholz, Patrick, 9470 Buchs (CH)
(74) Vertreter: Hilti Aktiengesellschaft Corporate Intellectual Property

(57) **Zusammenfassung**

Die Erfindung betrifft einen Spreizdübel mit zumindest einem Dübelkörper als erstes Element und zumindest einem Bolzen als zweites Element, wobei der Bolzen einen Expansionskörper aufweist, welcher den Dübelkörper radial nach aussen drängt, wenn der Expansionskörper in einer Auszugsrichtung relativ zum Dübelkörper versetzt wird. Erfindungsgemäss ist vorgesehen, dass an einem der beiden Elemente in einem Kontaktbereich mit dem anderen Element eine Doppelbeschichtung mit einer inneren Schicht und einer die innere Schicht überdeckenden äusseren Schicht vorgesehen ist, wobei die äussere Schicht zum anderen Element einen Reibungskoeffizienten aufweist, der grösser ist als ein Reibungskoeffizient der inneren Schicht zum anderen Element.

## Beschreibung

Die Erfindung betrifft einen Spreizdübel mit zumindest einem Dübelkörper, vorzugsweise einer Spreizhülse, als erstes Element und zumindest einem Bolzen als zweites Element, wobei der Bolzen einen Expansionskörper, vorzugsweise einen Spreizkonus, aufweist, welcher den Dübelkörper radial nach aussen drängt, wenn der Expansionskörper in einer Auszugsrichtung relativ zum Dübelkörper versetzt wird

Spreizdübel sind beispielsweise aus der EP 0514342 A1 bekannt. Sie werden in ein Bohrloch in einem Substrat eines Bauteils, z. B. in einer Wand oder einer Decke, eingesetzt. Durch Einziehen eines am Bolzen vorgesehenen Spreizkonus mit einer Schrägfläche in einen als Spreizhülse ausgebildeten Dübelkörper wird dieser Dübelkörper radial aufgeweitet und nach aussen gedrängt und dadurch der Spreizdübel im Substrat verankert. Gemäss EP 0514342 A1 ist am Kontaktbereich zwischen Spreizkonus und Dübelkörper eine reibungsmindernde Beschichtung vorgesehen.

Die US 2008050195 A beschreibt einen Spreizdübel, bei dem die Oberflächenrauigkeit der Spreizhülse zum hinteren Ende des Spreizdübels hin ansteigt.

Die DE 4225869 A1 beschreibt einen Dübel aus rostfreiem Stahl, bei dem durch Anziehen einer Schraube oder einer Mutter oder durch Eintreiben eines Spreizkörpers eine Aufspreizung des Dübelkörpers erfolgt und während des Aufspreizvorgangs zwei Flächen sich unter zunehmender Flächenpressung gegeneinander verschieben, wobei diese der Flächenpressung unterliegenden Flächen mit einer einer Blockierung entgegenwirkenden Beschichtung versehen sind, wobei bei einer der der Flächenpressung unterliegenden Flächen die Beschichtung durch Verzinken oder Nitrieren gebildet ist und fakultativ eine zusätzliche Schicht aus Gleitlack, Wachs oder Fett aufgebracht ist.

Die US 2009290953 A beschreibt eine Schraube mit einer Doppelbeschichtung mit einer abreibbaren äusseren Schicht.

Aufgabe der Erfindung ist es, einen besonders leistungsfähigen und vielseitig einsetzbaren, und zugleich auch besonders zuverlässigen und einfach herstellbaren Spreizdübel anzugeben.

Die Aufgabe wird erfindungsgemäss durch einen Spreizdübel mit den Merkmalen des Anspruchs 1 gelöst. Bevorzugte Ausführungsformen sind in den abhängigen Ansprüchen angegeben.

Ein erfindungsgemässer Spreizdübel ist dadurch gekennzeichnet, dass an einem der beiden Elemente in einem Kontaktbereich mit dem anderen Element eine Doppelbeschichtung mit einer inneren Schicht und einer die innere Schicht überdeckenden äusseren Schicht vorgesehen ist, wobei die äussere Schicht zum anderen Element einen Reibungskoeffizienten µ₂ aufweist, der grösser ist als ein Reibungskoeffizient µ₁ der inneren Schicht zum anderen Element.

Ein Grundgedanke der Erfindung kann darin gesehen werden, im Spreizbereich eines kraftkontrolliert spreizenden Spreizdübels eine multiple Beschichtung mit unterschiedlichen Reibungskoeffizienten vorzusehen, so dass µ₂ > µ₁ ist

Die Erfindung hat erkannt, dass bei der Auslegung von Spreizdübeln die Situation auftreten kann, bei der eine Änderung der Ausgestaltung des Spreizdübels zwar an einer Stelle zu einer Verbesserung des Ankerverhaltens führt, dies jedoch mit Einbussen an anderer Stelle einhergeht. So kann es beispielsweise einerseits wünschenswert sein, zwischen Expansionskörper und Dübelkörper einen hohen Reibungskoeffizienten vorzusehen, um ein Durchziehen des Expansionskörpers durch den Dübelkörper, das heisst insbesondere durch die Spreizhülse, und somit ein vorzeitiges Versagen des Spreizdübels bei übermässigen statischen Zuglasten zu vermeiden. Andererseits kann ein hoher Reibungskoeffizient nachteilig im Hinblick auf dynamische Risse, insbesondere im Erdbebenfall, in gerissenem Beton sein. Ist nämlich der Reibungskoeffizient zwischen Expansionskörper und Spreizhülse gross, so wird der Expansionskörper zwar tiefer in die Spreizhülse eingezogen, wenn sich der Riss, in dem sich der Spreizdübel befindet, aufweitet. Allerdings kehrt sich dieser Vorgang bei grossem Reibungskoeffizient nicht um, wenn sich der Riss im Anschluss wieder schliesst, und der Expansionskörper verbleibt tief in der Spreizhülse, was zu einer Schädigung des umgebenden Betons führen kann. Für gerissenen Beton kann daher ein niedriger Reibungskoeffizient vorteilhaft sein, um ein Vor- und Zurückgleiten des Expansionskörpers in der Spreizhülse bei Rissöffnung und anschliessender Rissschliessung zu gewährleisten.

Bei der Auslegung eines herkömmlichen Spreizdübels musste man sich daher entscheiden, ob man im Hinblick auf gute Eigenschaften in gerissenem Beton mit beweglichen Rissen einen niedrigen Reibungskoeffizienten zwischen Dübelkörper und Expansionskörper wählt, was jedoch mit einer geringeren statischen Auszugslast verbunden ist, oder ob ein hoher Reibungskoeffizient gewählt wird, welcher zwar zu hohen statischen Auszugslasten führt, jedoch zu schlechteren Eigenschaften in gerissenem Beton und/oder in dynamischen Situationen.

Hier setzt die Erfindung an und sieht an einem der beiden Elemente ("Dübelkörper" oder "Bolzen") im Kontaktbereich mit dem jeweils anderen Element, also dort, wo die beiden Elemente miteinander in Kontakt stehen und aneinander reiben, eine Doppelbeschichtung bestehend aus einer inneren Schicht und einer äusseren Schicht vor. Die Doppelbeschichtung ist dabei so ausgeführt, dass die äussere Schicht eine hohe Reibung mit dem benachbarten anderen Element aufweist, und die innere Schicht eine geringere Reibung mit dem benachbarten anderen Element. Bei dieser Konfiguration kann im statischen Fall die äussere Schicht wirken und hohe statische Lastwerte generieren. In dynamischen, insbesondere seismischen Situationen kann die äussere Schicht hingegen aufgrund der wiederholten Reibbewegung zwischen Dübelkörper und Expansionskörper abgetragen werden, so dass fortan die niedrigreibende innere Schicht wirkt, was ein wirkungsvolles Vor- und Zurückgleiten des Expansionskörpers ermöglicht und somit eine Beschädigung des Substrats verhindert. Das oben beschriebene Dilemma, gemäss dem je nach Anwendungsfall ein anderer Reibungskoeffizient vorteilhaft ist, kann damit aufgelöst werden und es kann einerseits eine besonders gute statische Leistungsfähigkeit bei Zuglasten in ungerissenem und gerissenem Beton und andererseits auch eine besonders gute Leistungsfähigkeit im Dynamik- oder Seismikfall und/oder eine besonders hohe Robustheit bei öffnendem und schliessendem Riss erhalten werden.

Die äussere Schicht deckt die innere Schicht nach aussen hin ab, das heisst die innere Schicht ist zwischen der äusseren Schicht und dem die Doppelbeschichtung tragenden einen Element angeordnet. Beispielsweise kann die innere Schicht unmittelbar auf dem einen Element angeordnet sein. Zwischen der inneren Schicht und dem einen Element können jedoch auch eine oder mehrere Zwischenschichten, wie zum Beispiel eine Korrosionsschutzschicht, vorgesehen sein. Der Reibungskoeffizient kann sich zwischen den beiden Schichten sprungartig ändern oder er kann zwischen den beiden Schichten stetig übergehen. Im Kontaktbereich liegen die beiden Elemente aneinander an, so dass es dort zur Reibung zwischen den beiden Elementen kommt.

Im Zusammenhang mit der Erfindung können im Hinblick auf die zugrundeliegenden physikalischen Effekte unter den Reibungskoeffizienten insbesondere die Reibungskoeffizienten für die Haftreibung verstanden werden. Da die Gleitreibung in der Regel jedoch eng mit der Haftreibung zusammenhängt, könnten alternativ, beispielsweise der besseren Messbarkeit halber, grundsätzlich auch die jeweiligen Reibungskoeffizienten für die Gleitreibung angegeben werden.

Der Dübelkörper und/oder der Bolzen, insbesondere sein Expansionskörper, bestehen bevorzugt aus einem Metallmaterial. Die Doppelbeschichtung ist an dem einen der beiden Elemente, das heisst entweder am Dübelkörper oder am Bolzen, insbesondere an seinem Expansionskörper, vorgesehen, das heisst das eine der beiden Elemente ist mit der Doppelbeschichtung beschichtet. Insbesondere ist die Doppelbeschichtung stoffschlüssig mit dem einen der beiden Elemente verbunden.

Der Dübelkörper ist erfindungsgemäss längs des Bolzens verschiebbar am Bolzen angeordnet, insbesondere befestigt. Soweit von "radial" und "axial" die Rede ist, soll sich dies insbesondere auf die Längsachse des Bolzens und/oder des Spreizdübels beziehen, die insbesondere die Symmetrie- und/oder Mittelachse des Bolzens beziehungsweise des Spreizdübels sein kann. Der Spreizdübel kann insbesondere ein kraftkontrolliert spreizender Spreizdübel sein.

Erfindungsgemäss wird der Dübelkörper vom Expansionskörper radial nach aussen gedrängt und dabei gegen die Bohrlochwand im Substrat gepresst, wenn der Expansionskörper in Auszugsrichtung des Bolzens relativ zum Dübelkörper axial versetzt wird. Bei diesem Vorgang, der insbesondere durch eine am Expansionskörper vorgesehene Schrägfläche bewirkt wird und bei dem der Dübelkörper, der vorzugsweise als Spreizhülse ausgebildet ist, auch aufgeweitet werden kann, wird der Spreizdübel im Bohrloch verankert. Vorzugsweise verläuft die Auszugsrichtung parallel zur Längsachse des Bolzens und/oder zeigt aus dem Bohrloch heraus. Insbesondere nimmt am Expansionskörper der Abstand der Oberfläche des Expansionskörpers von der Längsachse des Bolzens entgegen der Auszugsrichtung zu.

Erfindungsgemäss ist die Doppelbeschichtung zumindest in einem Kontaktbereich zwischen den beiden Elementen vorgesehen, also insbesondere in einem Bereich, in welchem der Dübelkörper so am Expansionskörper anliegt, dass Expansionskörper gegen den Dübelkörper wirken und letzteren radial nach aussen drängen kann. Die Doppelbeschichtung kann auch über den Kontaktbereich hinausreichen, was herstellungstechnische Vorteile haben kann.

Besonders vorteilhaft ist es, dass der Reibungskoeffizient der äusseren Schicht zum anderen Element um mindestens 20%, 50% oder 100% grösser ist als der Reibungskoeffizient der inneren Schicht zum anderen Element, das heisst µ₂ > 1.2 × µ₁, µ₂ > 1.5 × µ₁, beziehungsweise µ₂ > 2 × µ₁. Durch den signifikanten Unterschied der beiden Reibungskoeffizienten tritt der oben beschriebene Effekt besonders deutlich zutage.

Eine bevorzugte Weiterbildung der Erfindung liegt darin, dass die Doppelbeschichtung am Bolzen, insbesondere zumindest am Expansionskörper, vorgesehen ist. Demgemäss ist also das eine der beiden Elemente der Bolzen und das andere Element der Dübelkörper, vorzugsweise die Spreizhülse, und insbesondere ist die Doppelbeschichtung stoffschlüssig zumindest am Expansionskörper angeordnet. Dies kann im Hinblick auf den Herstellungsaufwand und die Zuverlässigkeit vorteilhaft sein. Der Kontaktbereich ist vorzugsweise zumindest am Expansionskörper gebildet.

Besonders zweckmässig ist es, dass der Dübelkörper eine Spreizhülse ist, die den Bolzen zumindest bereichsweise umgibt, und/oder dass der Expansionskörper ein Spreizkonus ist. Hierdurch wird eine besonders gleichmässige Krafteinleitung in Umfangsrichtung erzielt. Vorzugsweise beträgt die Winkelausdehnung der Spreizhülse um die Längsachse des Bolzens zumindest 270°, insbesondere zumindest 315° oder 340°. Gemäss dieser Ausführungsform kann in besonders einfacher Weise sichergestellt werden, dass der Bolzen nicht unmittelbar an der Bohrlochwand reibt, sondern zumindest grösstenteils nur mittelbar über die Spreizhülse. Der Spreizkonus ist erfindungsgemäss zum Aufspreizen der Spreizhülse, das heisst zum radialen Aufweiten der Spreizhülse, vorgesehen. Es können ein Dübelkörper oder auch mehrere Dübelkörper vorgesehen sein, und eine entsprechende Anzahl von Expansionskörpern. Der Spreizkonus kann eine mathematisch streng konische Oberfläche haben, muss dies aber nicht.

Nach der Erfindung kann der Bolzen eine Lastaufnahmeeinrichtung aufweisen, die insbesondere als Aussengewinde, als Innengewinde oder als Kopf ausgebildet sein kann. Die Lastaufnahmeeinrichtung dient zur Einleitung von Zugkräften, die in Auszugsrichtung gerichtet sind, in den Spreizdübel. Zweckmässigerweise ist der Expansionskörper in einem ersten Endbereich des Bolzens und die Lastaufnahmeeinrichtung in einem gegenüberliegenden zweiten Endbereich des Bolzens angeordnet. Insbesondere kann der Richtungsvektor der Auszugsrichtung vom Expansionskörper zur Lastaufnahmeeinrichtung gerichtet sein. Der Abstand der Oberfläche des Expansionskörpers zur Längsachse des Bolzens nimmt vorzugsweise mit zunehmendem Abstand von der Lastaufnahmeeinrichtung zu.

Der Spreizdübel ist vorzugsweise ein Spreizdübel des Bolzentyps. Bei einem solchen Spreizdübel wird der Expansionskörper beim Setzen des Dübels durch eine axiale Bewegung des Bolzens relativ zum Dübelkörper in den Dübelkörper eingezogen. Bei einem Spreizdübel des Bolzentyps ist der Bolzen vorzugsweise einstückig ausgebildet, insbesondere ist der Expansionskörper einstückig mit benachbarten Bolzenbereichen ausgeführt. Vorzugsweise kann am Bolzen ein Anschlag, beispielsweise eine Ringschulter, ausgebildet sein, der eine Verschiebung des Dübelkörpers vom Expansionskörper hinweg begrenzt.

Alternativ könnte der Spreizdübel ein Spreizdübel des Hülsentyps sein. Bei einem Spreizdübel des Hülsentyps weist der Bolzen eine vom Expansionskörper separate Ankerstange auf, wobei der Expansionskörper vorzugsweise über korrespondierende Gewinde mit der Ankerstange verbunden ist. Das Einziehen des Expansionskörpers beim Setzen des Dübels in den Dübelkörper kann dann vorzugsweise zumindest teilweise durch Rotation der Ankerstange relativ zum Expansionskörper bewirkt werden, welche von einem Spindeltrieb, der von den korrespondierenden Gewinden gebildet wird, in eine Axialbewegung des Expansionskörpers relativ zur Ankerstange umgesetzt wird. Insbesondere bei einem Spreizdübel des Hülsentyps kann der Dübelkörper, der auch mehrteilig ausgeführt sein kann, auch bis zum Bohrlochmund reichen.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine teilweise längsgeschnittene Ansicht eines in einem Betonsubstrat gesetzten erfindungsgemässen Spreizdübels gemäss einer ersten Ausführungsform;
- Figur 2:: eine Detailansicht des Spreizdübels aus Figur 1;
- Figur 3:: eine teilweise längsgeschnittene Ansicht des Bolzens eines Spreizdübels bei einer Abwandlung der Ausführungsform der Figuren 1 und 2;
- Figur 4:: eine teilweise längsgeschnittene Ansicht eines in einem Betonsubstrat gesetzten erfindungsgemässen Spreizdübels gemäss einer weiteren Ausführungsform; und
- Figur 5:: eine Detailansicht des Spreizdübels aus Figur 4.

Gleich oder analog wirkende Elemente sind in den Figuren mit denselben Bezugszeichen gekennzeichnet.

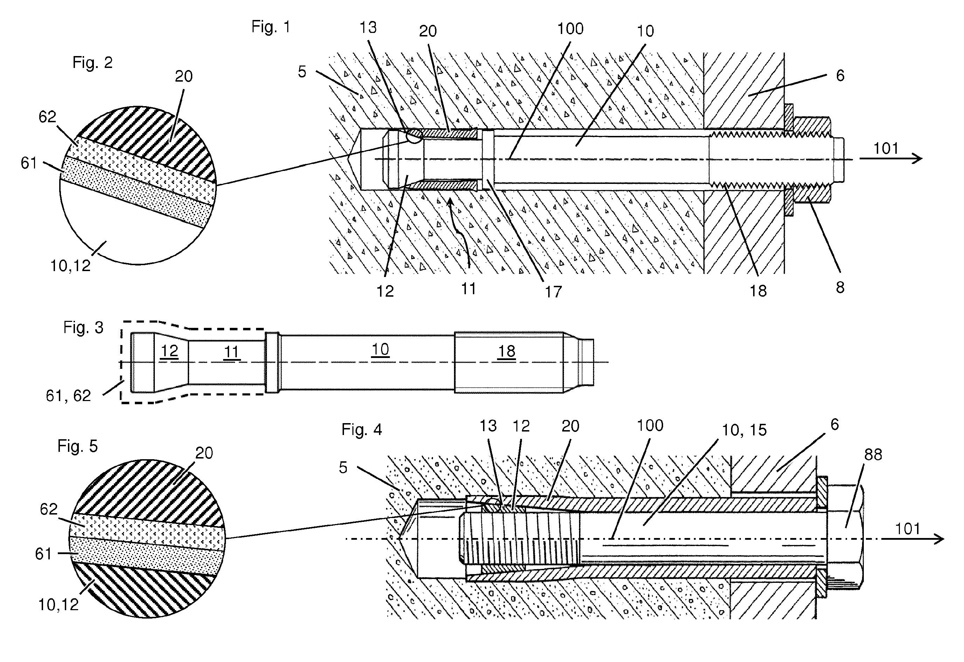

Die Figuren 1 und 2 zeigen ein erstes Ausführungsbeispiel eines Spreizdübels gemäss der Erfindung. Wie insbesondere Figur 1 zeigt, weist der Spreizdübel einen Bolzen 10 und einen als Spreizhülse ausgebildeten Dübelkörper 20 auf, welcher den Bolzen 10 umgibt. Der Bolzen 10 weist einen Halsbereich 11 mit konstantem Querschnitt und im Anschluss an den Halsbereich 11 im vorderen Endbereich des Bolzens 10 einen als Spreizkonus ausgebildeten Expansionskörper 12 für den Dübelkörper 20 auf, an welchem die Oberfläche als Schrägfläche 13 ausgebildet ist. Die Schrägfläche 13 ist hier rotationsymmetrisch ausgeführt. Aufgrund der Schrägfläche 13 weitet sich der Bolzen 10 am Expansionskörper 12 ausgehend vom Halsbereich 11 zu seinem vorderen Ende hin auf. Auf der dem Expansionskörper 12 abgewandten Seite des Halsbereichs 11 weist der Bolzen 10 einen beispielsweise als Ringschulter ausgebildeten Anschlag 17 für den als Spreizhülse ausgebildeten Dübelkörper 20 auf. An seinem dem Expansionskörper 12 entgegengesetzten hinteren Endbereich ist der Bolzen 10 mit einem Aussengewinde 18 für eine Mutter 8 versehen.

Beim Setzen des Spreizdübels wird der Bolzen 10 mit dem Expansionskörper 12 voran entgegen der Auszugsrichtung 101 parallel zur Längsachse 100 des Bolzens 10 in ein Bohrloch im Substrat 5 aus Figur 1 geschoben. Aufgrund des Anschlags 17 wird dabei auch der als Spreizhülse ausgebildete Dübelkörper 20 in das Bohrloch eingebracht. Sodann wird der Bolzen 10, beispielsweise durch Anziehen der Mutter 8, wieder ein Stück weit in der parallel zur Längsachse 100 verlaufenden Auszugsrichtung 101 aus dem Bohrloch herausgezogen. Aufgrund seiner Reibung mit der Bohrlochwand bleibt der als Spreizhülse ausgebildete Dübelkörper 20 dabei zurück und es kommt zu einer Verschiebung des Bolzens 10 relativ zum Dübelkörper 20. Bei dieser Verschiebung dringt der Expansionskörper 12 des Bolzens 10 immer tiefer so in den Dübelkörper 20 ein, dass der Dübelkörper 20 vom Expansionskörper 12 radial aufgeweitet und mit der Wand des Bohrlochs verpresst wird. Durch diesen Mechanismus wird der Spreizdübel im Substrat 5 fixiert. Der gesetzte Zustand des Spreizdübels, in welchem er im Substrat 5 fixiert ist, ist in Figur 1 gezeigt. Mittels der Mutter 8 kann ein Anbauteil 6 am Substrat 5 festgelegt werden.

Wie insbesondere in Figur 2 erkennbar ist, weist der Expansionskörper 12 in einem an seiner Schrägfläche 13 ausgebildeten Kontaktbereich mit dem Dübelkörper 20 eine Doppelbeschichtung bestehend aus einer inneren Schicht 61 und einer äusseren Schicht 62 auf, wobei die innere Schicht 61 zwischen der äusseren Schicht 62 und dem die beiden Schichten 61, 62, insbesondere stoffschlüssig, tragenden Expansionskörper 12 angeordnet ist. Dabei ist der Reibungskoeffizient, insbesondere Haftreibungskoeffizient µ₂ der äusseren Schicht 62 zum benachbarten Dübelkörper 20 grösser als der Reibungskoeffizient, insbesondere Haftreibungskoeffizient µ₁ der inneren Schicht 61 zum benachbarten Dübelkörper 20, das heisst µ₂ > µ₁. In einer einfachen statischen Lastsituation reibt der Bolzen 10 mit dem Expansionskörper 12 an der äusseren Schicht 62 am Dübelkörper 20, so dass der vergleichsweise hohe Reibungskoeffizient µ₂ wirkt und damit hohe statische Auszugslasten erreicht werden können. In einer dynamischen Lastsituation hingegen kann die äusseren Schicht 62 des Bolzens 10 abgerieben werden. Fortan reibt dann der Expansionskörper 12 an der inneren Schicht 61 am Dübelkörper 20, so dass nun der vergleichsweise geringe Reibungskoeffizient µ₁ wirkt und ein wirksames Vor- und Zurückgleiten des Expansionskörpers 12 im Dübelkörper 20 ermöglicht wird.

Beim Ausführungsbeispiel der Figuren 1 und 2 wurde die Doppelbeschichtung bestehend aus den Schichten 61 und 62 am Expansionskörper 12 beschrieben. Wie Figur 3 zeigt kann sich die - in Figur 3 mit Strichlinien schematisch stark vergrössert dargestellte - Doppelbeschichtung mit den Schichten 61 und 62 aber zusätzlich auch auf den Halsbereich 11 erstrecken.

Bei den Ausführungsbeispielen der Figuren 1 bis 3 ist der Spreizdübel ein sogenannter Bolzentyp. Ein weiteres Ausführungsbeispiel, bei dem der Spreizdübel als sogenannter Hülsentyp ausgebildet ist, ist in den Figuren 4 und 5 gezeigt. Im Gegensatz zu den Spreizdübeln aus den Figuren 1 bis 3, bei denen der Expansionskörper 12 axial fest am restlichen Bolzen 10 befestigt und insbesondere einstückig mit dem restlichen Bolzen 10 ausgebildet ist, weist der Bolzen 10 des Ausführungsbeispiels der Figuren 4 und 5 eine Ankerstange 15 auf, die vom Expansionskörper 12 getrennt ist, das heisst die Ankerstange 15 und der Expansionskörper 12 sind zwei separate Teil. Der Expansionskörper 12 mit der Schrägfläche 13 weist ein Innengewinde auf, welches mit einem Aussengewinde an der Ankerstange 15 des Bolzens 10 korrespondiert. Darüber hinaus reicht beim Spreizdübel der Figuren 4 und 5 der als Spreizhülse ausgebildete Dübelkörper 20, welcher auch mehrteilig sein kann, bis zum Bohrlochmund, und am rückwärtigen Endbereich des Bolzens 10 ist ein verbreiterter Kopf 88 drehfest an der Ankerstange 15 angeordnet.

Zum Setzen des Spreizdübels der Figuren 4 und 5 wird die Ankerstange 15, vorzugsweise über den Kopf 88, um die Längsachse 100 in Drehung versetzt. Die korrespondierenden Gewinde wandeln diese Drehbewegung der Ankerstange 15 in eine Axialbewegung des Expansionskörpers 12 relativ zur Ankerstange 15 und damit relativ zum Dübelkörper 20 um, was zum Einziehen des Expansionskörpers 12 mit der Schrägfläche 13 in den Dübelkörper 20 führt.

Auch beim Spreizdübel der Figuren 4 und 5 weist der Expansionskörper 12 des Bolzens 10 in einem an der Schrägfläche 13 ausgebildeten Kontaktbereich mit dem Dübelkörper 20 eine Doppelbeschichtung bestehend aus einer inneren Schicht 61 und einer äusseren Schicht 62 auf, wobei der Reibungskoeffizient µ₂ der äusseren Schicht 62 zum benachbarten Dübelkörper 20 grösser als der Reibungskoeffizient der inneren Schicht 61 zum benachbarten Dübelkörper 20 ist, das heisst µ₂ > µ₁, so dass auch damit besonders gute statische und dynamische Eigenschaften erzielt werden können.

## Patentansprüche

1. Spreizdübel mit
- zumindest einem Dübelkörper (20) als erstes Element und
- zumindest einem Bolzen (10) als zweites Element, wobei der Bolzen (10) einen Expansionskörper (12) aufweist, welcher den Dübelkörper (20) radial nach aussen drängt, wenn der Expansionskörper (12) in einer Auszugsrichtung (101) relativ zum Dübelkörper (20) versetzt wird,
**dadurch gekennzeichnet,**
**dass** an einem der beiden Elemente in einem Kontaktbereich mit dem anderen Element eine Doppelbeschichtung mit einer inneren Schicht (61) und einer die innere Schicht (61) überdeckenden äusseren Schicht (62) vorgesehen ist, wobei die äussere Schicht (62) zum anderen Element einen Reibungskoeffizienten (µ₂) aufweist, der grösser ist als ein Reibungskoeffizient (µ₁) der inneren Schicht (61) zum anderen Element.

2. Spreizdübel nach Anspruch 1,
**dadurch gekennzeichnet,**
**dass** der Reibungskoeffizient (µ₂) der äusseren Schicht (62) zum anderen Element um mindestens 20%, 50% oder 100% grösser ist als der Reibungskoeffizient (µ₁) der inneren Schicht (61) zum anderen Element.

3. Spreizdübel nach einem der vorstehenden Ansprüche,
**dadurch gekennzeichnet,**
**dass** die Doppelbeschichtung zumindest am Expansionskörper (12) vorgesehen ist.

4. Spreizdübel nach einem der vorstehenden Ansprüche,
**dadurch gekennzeichnet,**
**dass** das Dübelkörper (20) eine Spreizhülse ist, die den Bolzen (10) zumindest bereichsweise umgibt, und
**dass** der Expansionskörper (12) ein Spreizkonus ist.

5. Spreizdübel nach einem der vorstehenden Ansprüche,
**dadurch gekennzeichnet,**
**dass** er ein Spreizdübel des Bolzentyps ist.
